# EUROPEAN PATENT APPLICATION

(11) **EP 4 492 694 A1**
(43) Date of publication of application: **15.01.2025**
(21) Application number: 23773459.5
(22) Date of filing: 01.02.2023
(51) Int. Cl.: H04B 1/10

(54) **SIGNAL INTERFERENCE CONTROL METHOD, LTE SYSTEM, PHYSICAL LAYER DEVICE AND STORAGE MEDIUM**

(30) Priority: 21.03.2022 CN 202210275997
(71) Applicant: ZTE Corporation, Shenzhen, Guangdong 518057 (CN)
(72) Inventor: LIU, Jie, Shenzhen, Guangdong 518057 (CN); HU, Haipeng, Shenzhen, Guangdong 518057 (CN); XUE, Qiang, Shenzhen, Guangdong 518057 (CN)
(74) Representative: WBH Wachenhausen Patentanwälte PartG mbB
(86) International application number: PCT/CN2023/074157
(87) International publication number: WO 2023/179208

(57) **Abstract**

Provided in the present application are a signal interference control method, an LTE system, a physical layer device and a storage medium. The signal interference control method comprises: determining target position information, wherein the target position information comprises a position allocation condition of a first RB in a transmission spectrum, and the first RB is a set of spectrum resources which are not used at the next moment (S110); and sending the target position information to a physical layer device, so that the physical layer device determines a target CRS according to the target position information, and reduces the transmission power of the target CRS, wherein the target CRS is a CRS corresponding to the first RB at the next moment (S120).

## Description

### CROSS-REFERENCE TO RELATED APPLICATION

This application is filed on the basis of Chinese patent application No. 202210275997.6 filed March 21, 2022, and claims priority to the Chinese patent application, the entire contents of which are incorporated herein by reference.

### TECHNICAL FIELD

The present disclosure relates to, but not limited to, the field of wireless communication, and more particularly, to a signal interference control method, a Long Term Evolution (LTE) system, a physical layer device, and a storage medium.

### BACKGROUND

With the ongoing advancement of 5th Generation (5G) technologies, the number of 5G New Radio (5GNR) terminal devices is increasing. However, a significant proportion of users still rely on 4th Generation (4G) LTE terminal devices. Currently, to accommodate the communication needs of different standards, Dynamic Spectrum Sharing (DSS) technology allows both the LTE system and the NR system to operate on the same spectrum, enabling them to share spectrum resources simultaneously.

In the LTE system, a Cell-Specific Reference Signal (CRS) is transmitted in each Transmission Time Interval (TTI). The CRS is usually sent at full bandwidth, which is likely to cause interference to the channel of the NR system, resulting in a reduction in the spectral efficiency of the NR system. According to the provisions of related protocols, the channel of the NR system can perform Resource Element (RE)-level rate matching for a CRS of a Resource Block (RB) of the current cell, and then perform reduced-order scheduling to reduce the interference of the CRS. However, existing protocols do not address how to reduce CRS interference from neighboring cells, which continues to impact the spectral efficiency and user experience of the NR system.

### SUMMARY

The following provides a summary of the subject matter described herein. This summary is not intended to limit the scope of protection of the claims.

Embodiments of the present disclosure provide a signal interference control method, an LTE system, a physical layer device, and a storage medium.

In accordance with a first aspect of the present disclosure, an embodiment provides a signal interference control method, applied to an LTE system in communication connection with a physical layer device, the method including: determining target position information, where the target position information includes a position distribution status of a first RB in a transmission spectrum, and the first RB is a set of spectrum resources which are not to be used at a next moment; and sending the target position information to the physical layer device, such that the physical layer device determines a target CRS according to the target position information, and reduces a transmit power of the target CRS, where the target CRS is a CRS corresponding to the first RB at the next moment.

In accordance with a second aspect of the present disclosure, an embodiment provides a signal interference control method, applied to a physical layer device in communication connection with an LTE system, the method including: acquiring target position information sent by the LTE system, where the target position information includes a position distribution status of a first RB in a transmission spectrum, and the first RB is a set of spectrum resources which are not to be used at a next moment; and determining a target CRS according to the target position information and reducing a transmit power of the target CRS, where the target CRS is a CRS corresponding to the first RB at the next moment.

In accordance with a third aspect of the present disclosure, an embodiment provides an LTE system, including: a memory, a processor, and a computer program stored in the memory and executable by the processor, where the computer program, when executed by the processor, causes the processor to perform the signal interference control method in accordance with the first aspect.

In accordance with a fourth aspect of the present disclosure, an embodiment provides a physical layer device, including: a memory, a processor, and a computer program stored in the memory and executable by the processor, where the computer program, when executed by the processor, causes the processor to perform the signal interference control method in accordance with the second aspect.

In accordance with a fifth aspect of the present disclosure, an embodiment provides a computer-readable storage medium, storing computer-executable instructions which, when executed by a processor, cause the processor to perform the signal interference control method in accordance with the first aspect or the signal interference control method in accordance with the second aspect.

Additional features and advantages of the present disclosure will be set forth in the description which follows, and in part will be apparent from the description, or may be learned by the practice of the present disclosure. The purposes and other advantages of the present disclosure can be realized and obtained by the structures particularly pointed out in the description, claims and drawings.

### BRIEF DESCRIPTION OF DRAWINGS

The drawings are provided for a further understanding of the technical schemes of the present disclosure and form part of the description. Both the drawings and the embodiments presented are intended to illustrate the technical schemes, but not to limit them.
FIG. 1 is a flowchart of a signal interference control method applied to an LTE system according to an embodiment of the present disclosure;
FIG. 2 is a schematic diagram of a DSS cell according to another embodiment of the present disclosure;
FIG. 3 is a flowchart of determining a first RB and a second RB according to another embodiment of the present disclosure;
FIG. 4 is a flowchart of determining target position information according to another embodiment of the present disclosure;
FIG. 5 is a flowchart of reducing a transmit power of a target CRS according to another embodiment of the present disclosure;
FIG. 6 is a flowchart of restoring a transmit power of a target CRS according to another embodiment of the present disclosure;
FIG. 7 is a flowchart of a signal interference control method applied to a physical layer device according to another embodiment of the present disclosure;
FIG. 8 is a flowchart of determining a target power according to another embodiment of the present disclosure;
FIG. 9 is a flowchart of restoring a transmit power of a target CRS according to another embodiment of the present disclosure;
FIG. 10 is a flowchart of an example of the present disclosure;
FIG. 11 is a block diagram of an LTE system according to another embodiment of the present disclosure; and
FIG. 12 is a block diagram of a physical layer device according to another embodiment of the present disclosure.

### DETAILED DESCRIPTION

To clarify the purposes, technical schemes, and advantages of the present disclosure, the present disclosure is described in further detail in conjunction with accompanying drawings and examples. It should be understood that the embodiments described herein are merely used for illustrating the present disclosure, and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. Terms like "first" and "second" used in the description, claims, and accompanying drawings are meant to distinguish between similar purposes, and are not necessarily indicative of a specific sequence or priority.

The present disclosure provides a signal interference control method, an LTE system, a physical layer device, and a storage medium. The signal interference control method includes: determining target position information, where the target position information includes a position distribution status of a first RB in a transmission spectrum, and the first RB is a set of spectrum resources which are not to be used at a next moment; and sending the target position information to a physical layer device, such that the physical layer device determines a target CRS according to the target position information, and reduces a transmit power of the target CRS, where the target CRS is a CRS corresponding to the first RB at the next moment. According to the technical scheme of this embodiment, the power of the target CRS can be reduced to reduce the interference of the target CRS to a channel of a neighboring cell and improve the spectral efficiency of the neighboring cell, thereby improving user experience of the communication system.

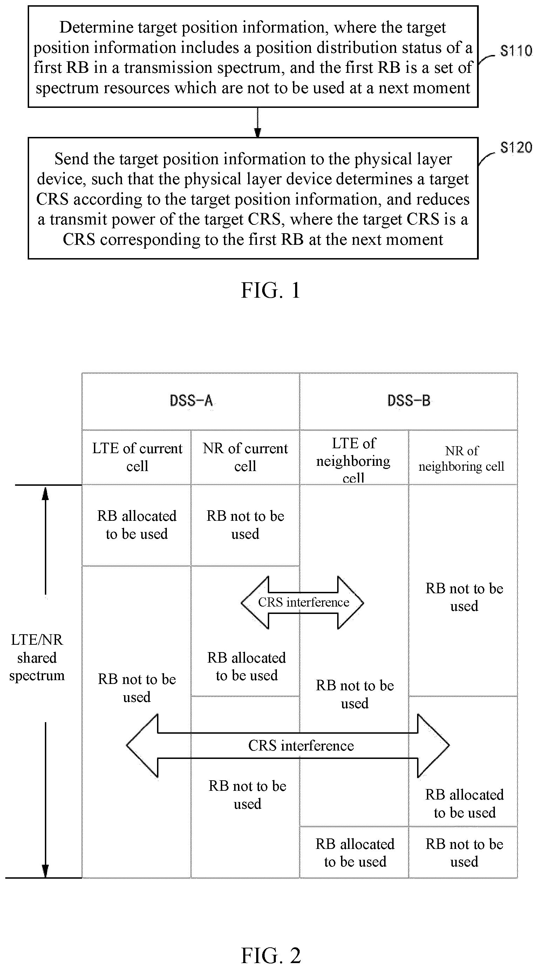

It should be noted that the LTE system of this embodiment may be deployed in a DSS cell shown in FIG. 2. In a DSS cell D, the LTE system and an NR system are deployed, or a cocoverage network of the LTE system and the NR system is deployed. In addition to the NR system, a system sharing the same spectrum with or having the same coverage as the LTE system may also be a Universal Mobile Telecommunications System (UMTS) system, a Global System for Mobile Communications (GSM) system, a 6th Generation (6G) system, etc. The type of the system co-deployed with the LTE system is not limited in this embodiment, as long as a transmission channel of the co-deployed system is interfered by a CRS signal of the LTE system and transmission performance of the co-deployed system is affected by the interference. It can be understood that the transmission channel interfered by the CRS may be a Physical Downlink Shared Channel (PDSCH) of the NR system, and the type of the transmission channel is not limited in this embodiment.

Embodiments of the present disclosure will be described in further detail in conjunction with the accompanying drawings. Unless otherwise specified, the embodiments of the present disclosure are described using an example where the LTE system is co-deployed with an NR system in a DSS cell and a transmission channel affected by the CRS in the NR system is an NR PDSCH. This example is only for the convenience of describing the technical scheme of this embodiment, and is not intended to limit the technical scheme of the present disclosure.

FIG. 1 is a flowchart of a signal interference control method according to an embodiment of the present disclosure. The signal interference control method is applied to an LTE system in communication connection with a physical layer device. The signal interference control method includes, but not limited to, the following steps S110 and S 120.

At S 110, target position information is determined, where the target position information includes a position distribution status of a first RB in a transmission spectrum, and the first RB is a set of spectrum resources which are not to be used at a next moment.

It should be noted that for two neighboring cells, a CRS of an LTE system of each cell is sent at full bandwidth, so the CRS of the current cell not only interferes with an NR PDSCH of the current cell, but also interferes with an NR PDSCH of the neighboring cell. For example, in an example shown in FIG. 2, a DSS-A cell and a DSS-B cell are two neighboring cells. When an NR system of the DSS-B cell transmits a signal using an allocated RB, a CRS signal of the DSS-A cell is sent at full bandwidth all the time, causing interference to an NR PDSCH of the DSS-B cell, and resulting in a reduction in the spectral efficiency of the NR system of the DSS-B cell. In this case, according to this embodiment, the transmit power of the CRS is reduced to reduce the interference caused by the CRS of the current cell to the NR PDSCH of the neighboring cell.

It should be noted that the LTE system does not maintain full scheduling at all moments. For the DSS cells shown in FIG. 2, both the DSS-A cell and the DSS-B cell have some RBs scheduled by the LTE system at the same time, and if the power of the CRS is reduced on the allocated RBs, the channel estimation and access performance on the LTE terminal device side of the current cell will be reduced. Therefore, in this embodiment, a scheduling module of the LTE system may determine a set of spectrum resources that are not to be used at the next moment as the first RB, and reduce only the power of the CRS on the first RB to reduce the interference of the CRS on the NR PDSCH of the neighboring cell at the spectrum position corresponding to the first RB, thereby improving the spectrum scheduling efficiency of the NR system of the neighboring cell without affecting the channel estimation and access on the LTE terminal device side of the current cell.

It should be noted that the target position information may be in any form, e.g., a set of positions of the first RB, common bitmap information, etc. The form of the target position information may be selected by those having ordinary skills in the art according to actual needs, and is not limited herein, as long as the physical layer device can recognize the positions of the first RB.

It should be noted that after the DSS cell is successfully established and the NR system and the LTE system start normal operation, RE-level rate matching and reduced-order scheduling may also be performed on the LTE CRS position through the NR system of the current cell according to related protocols to reduce the interference of the CRS of the current cell to the NR PDSCH of the current cell. The process of rate matching and reduced-order scheduling is a technology well known to those having ordinary skills in the art, and will not be described in detail herein.

At S 120, the target position information is sent to the physical layer device, such that the physical layer device determines a target CRS according to the target position information, and reduces a transmit power of the target CRS, where the target CRS is a CRS corresponding to the first RB at the next moment.

It should be noted that the adjustment of the power of the CRS is usually implemented by the physical layer device. Therefore, after the first RB is determined, the target position information including positions of the first RB is determined, such that the physical layer device can determine the positions of the first RB according to the target position information, determine the CRS corresponding to the positions of the first RB as the target CRS, and reduce the power of the target CRS at the next moment to reduce the interference of the CRS of the current cell to the NR PDSCH of the neighboring cell at the next moment.

It should be noted that in this embodiment, the first RB is an RB that is not to be used at the next moment, the target CRS is a CRS corresponding to the positions of the first RB at the next moment, and the power of the CRS is reduced before the CRS is transmitted at the next moment, so as to realize the prediction and processing of interference of the CRS. It can be understood that during operation of the LTE system, the technical scheme of this embodiment may be executed once at each moment or executed periodically depending on actual needs.

It should be noted that the physical layer device may configure the transmit power of the CRS. In this embodiment, after the transmit power of the target CRS is reduced, the corresponding power configuration parameter may be processed by resource mapping or an Inverse Fast Fourier Transform (IFFT) and then sent to the LTE system through a Remote Radio Unit (RRU), such that the LTE system reduces the transmit power of the target CRS according to the power configuration parameter. The process of information exchange between the physical layer device and the LTE system is a technology well known to those having ordinary skills in the art, and will not be described in detail herein.

It should be noted that in this embodiment, by reducing the transmit power of the target CRS, the target CRS propagates to the neighboring cell at a lower power, thereby reducing interference to the NR PDSCH of the neighboring cell. During the execution, there is no need to adjust the system configuration or the CRS configuration of the neighboring cell, thereby effectively reducing the system configuration complexity, and there is no need to configure additional resources for the CRS of the current cell to reduce the interference, thereby effectively avoiding the reduction of the number of symbols available for NR due to the consumption of additional RE resources.

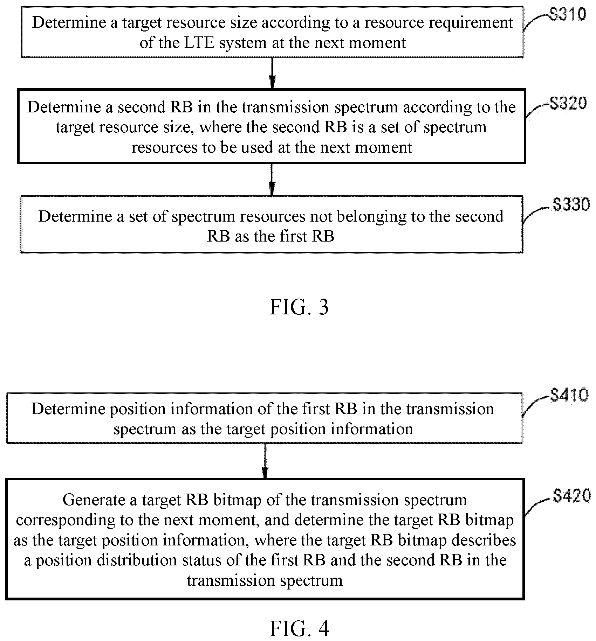

In addition, in an embodiment, referring to FIG. 3, before 5110 in the embodiment shown in FIG. 1, the method further includes, but not limited to, the following steps S310, S320, and S330.

At S310, a target resource size is determined according to a resource requirement of the LTE system at the next moment.

At S320, a second RB in the transmission spectrum is determined according to the target resource size, where the second RB is a set of spectrum resources to be used at the next moment.

At S330, a set of spectrum resources not belonging to the second RB is determined as the first RB.

It should be noted that in order to determine the first RB, the second RB to be used at the next moment may be determined first, and then the set of resources other than the second RB can be determined as the first RB. The resources to be used at the next moment are usually determined by the resource requirement. The resource requirement may be determined according to a Buffer Status Report (BSR). After acquiring the BSR corresponding to the next moment, a baseband module of the LTE system estimates a required target resource size according to a size of the BSR, and then determines the second RB to be used from the resources available at the next moment according to the target resource size.

It should be noted that because the second RB can be determined according to the BSR, a set of resources other than the second RB can be directly determined as the first RB, thereby improving the efficiency of determining the first RB. It can be understood that the first RB may be one RB occupying consecutive positions in the transmission spectrum or may be a set of RBs occupying nonconsecutive positions, and whether the positions of the first RB are consecutive or not is not limited in this embodiment.

In addition, in an embodiment, referring to FIG. 4, S 110 in the embodiment shown in FIG. 1 includes, but not limited to, a following step S410 or S420.

At S410, position information of the first RB in the transmission spectrum is determined as the target position information.

At S420, a target RB bitmap of the transmission spectrum corresponding to the next moment is generated, and the target RB bitmap is determined as the target position information, where the target RB bitmap describes a position distribution status of the first RB and the second RB in the transmission spectrum.

It should be noted that after the positions of the first RB are determined according to the second RB, a set of position information of the first RB in the transmission spectrum may be acquired as the target position information, and the physical layer device may determine a CRS corresponding to the target position information as the target CRS. The form of the position information may be determined according to actual needs.

In addition, the target position information may also be a bitmap of the transmission spectrum. For example, for a bandwidth of 20 M, the target RB bitmap may be a bitmap of 100 bits of 0s and 1s, where 1 represents the second RB, and 0 represents the first RB. In the DSS-A cell shown in FIG. 2, the target RB bitmap may be 111111000...00 (100 bits in total), and after acquiring the target RB bitmap, the physical layer device may determine the position distribution status of the first RB and the second RB according to the distribution of 0s and 1s, to provide a data basis for subsequent power parameter calculation.

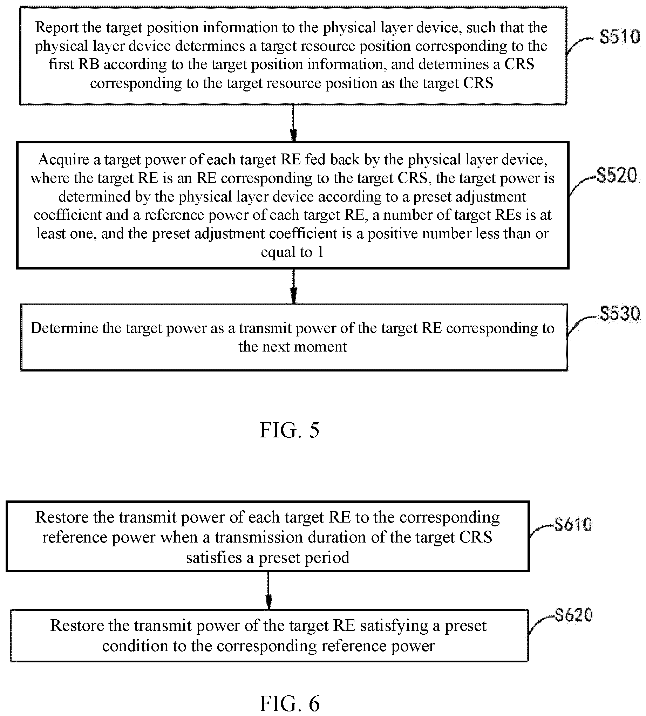

In addition, in an embodiment, referring to FIG. 5, S120 in the embodiment shown in FIG. 1 includes, but not limited to, the following steps S510, S520, and S530.

At S510, the target position information is reported to the physical layer device, such that the physical layer device determines a target resource position corresponding to the first RB according to the target position information, and determines a CRS corresponding to the target resource position as the target CRS.

At S520, a target power of each target RE fed back by the physical layer device is acquired, where the target RE is an RE corresponding to the target CRS, the target power is determined by the physical layer device according to a preset adjustment coefficient and a reference power of each target RE, a number of target REs is at least one, and the preset adjustment coefficient is a positive number less than or equal to 1.

At S530, the target power is determined as a transmit power of the target RE corresponding to the next moment

It should be noted that the power of the target CRS may be reduced by reducing the power of the target RE. After the physical layer device determines the target CRS according to the target position information, each RE corresponding to the target CRS is determined as the target RE. Because the reference power of the target RE is configured by a higher layer, the preset adjustment coefficient may be set in the physical layer device. For example, a suppression factor less than 1 is set, and the product of the suppression factor and the reference power is used as the target power, thereby suppressing the power of the RE. The target power of the target RE is applied to the LTE system to reduce the transmit power of the target CRS.

It should be noted that the suppression of the power of the RE may be realized by replanning the transmit powers of all REs by the physical layer device. In an example where the target position information is the target RB bitmap, the physical layer device acquires a preconfigured reference power after receiving the target RB bitmap, and each bit in the target RB bitmap may correspond to one RE, such that the transmit power of REs corresponding to the value of 1 in the target RB bitmap is a reference power E_RS, and the transmit power of REs corresponding to the value of 0 is E_RS×α, where α represents the preset adjustment coefficient, and α ∈ (0,1]. A smaller value of α indicates a lower power of the CRS on the corresponding RE. The value of α may be adjusted according to actual needs.

It should be noted that after the powers of the REs are re-planned, resource mapping, IFFT, and the like may be performed for the LTE system in accordance with the provisions of existing protocol, and the processed power configuration is sent through an RRU, such that the LTE system can apply the target power of each target RE to suppress the target CRS at the next moment.

In addition, in an embodiment, after acquiring a target power of each target RE fed back by the physical layer device, the method further includes acquiring the reference power of each target RE fed back by the physical layer device; and referring to FIG. 6, after S530 in the embodiment shown in FIG. 5, the method further includes, but not limited to, a following step S610 or S620.

At S610, the transmit power of each target RE is restored to the corresponding reference power when a transmission duration of the target CRS satisfies a preset period.

At S620, the transmit power of the target RE satisfying a preset condition is restored to the corresponding reference power.

It should be noted that the reduction of the power of the target CRS can effectively reduce the interference to the NR PDSCH of the neighboring cell, but for the current cell, after the power of the CRS is reduced, NR causes interference to the LTE CRS, which has impact on the channel estimation and access of the LTE terminal device side. In order to reduce this impact, the power of the target CRS needs to be periodically restored.

It should be noted that the preset period may be a preset duration. After the target CRS is transmitted at the next moment, a timer starts timing. When the timing of the timer reaches the preset period, the suppression of the transmit power of the target CRS is stopped, and the transmit power of the target RE is restored to the reference power. The duration of the preset period may be set according to actual needs. Of course, after the transmit power of the target RE is restored to the reference power, the steps of the embodiment shown in FIG. 1 may be executed again at the next moment to reduce the interference to the NR PDSCH of the neighboring cell, or the steps of the embodiment shown in FIG. 1 may be executed again after a period of time, which is not limited herein.

It should be noted that in addition to the setting of the preset period for timing, a preset condition may also be set. When the preset condition is satisfied, the transmit power of a part of the target REs is restored, so as to provide sufficient resources for the LTE terminal device side. For example, the preset condition may be a third RB in the first RB, the third RB being a subset of the first RB, and the power of the target REs at CRS positions corresponding to the third RB is restored. For another example, the preset condition may be a subframe of the LTE system, the power of the target REs is restored in a fixed subframe, and then a Multicast Broadcast Single Frequency Network (NMSFN) subframe is configured to reduce the interference of NR to the LTE CRS.

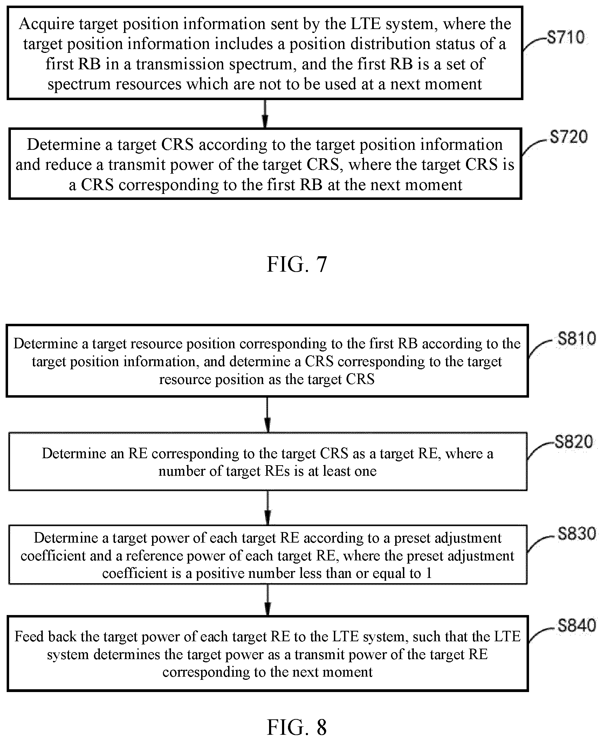

In addition, another embodiment of the present disclosure provides a signal interference control method, applied to a physical layer device in communication connection with an LTE system. Referring to FIG. 7, the signal interference control method includes, but not limited to, the following steps S710 and S720.

At S710, target position information sent by the LTE system is acquired, where the target position information includes a position distribution status of a first RB in a transmission spectrum, and the first RB is a set of spectrum resources which are not to be used at a next moment.

At S720, a target CRS is determined according to the target position information and a transmit power of the target CRS is reduced, where the target CRS is a CRS corresponding to the first RB at the next moment.

It should be noted that the technical scheme of this embodiment is similar to that of the embodiment shown in FIG. 1, except that this embodiment is executed by the physical layer device, and the physical layer device determines positions of the first RB according to the target position information reported by the LTE system, and reduces the power of the target CRS to be transmitted at the next moment at the corresponding positions, thereby reducing the interference to a channel of a neighboring cell. For technical principles and effects of this embodiment, reference may be made to the description of the embodiment shown in FIG. 1, and the details will not be repeated herein for simplicity of description.

In addition, in an embodiment, the target position information includes at least one of
position information of the first RB in the transmission spectrum; or
a target RB bitmap of the transmission spectrum corresponding to the next moment, where the target RB bitmap describes a position distribution status of the first RB and a second RB in the transmission spectrum, and the second RB is a set of spectrum resources to be used at the next moment.

It should be noted that the technical scheme of this embodiment is similar to those of the embodiments shown in FIG. 3 and FIG. 4, except that this embodiment is executed by the physical layer device, and after acquiring the target position information, the physical layer device determines the positions of the first RB according to the form of the target position information, to provide a data basis for reducing the power of the target CRS. For technical principles and effects of this embodiment, reference may be made to the description of the embodiments shown in FIG. 3 and FIG. 4, and the details will not be repeated herein for simplicity of description.

In addition, in an embodiment, referring to FIG. 8, S720 in the embodiment shown in FIG. 7 includes, but not limited to, the following steps S810, S820, S830, and S840.

At S810, a target resource position corresponding to the first RB is determined according to the target position information, and a CRS corresponding to the target resource position is determined as the target CRS.

At S820, an RE corresponding to the target CRS is determined as a target RE, where a number of target REs is at least one.

At S830, a target power of each target RE is determined according to a preset adjustment coefficient and a reference power of each target RE, where the preset adjustment coefficient is a positive number less than or equal to 1.

At S840, the target power of each target RE is fed back to the LTE system, such that the LTE system determines the target power as a transmit power of the target RE corresponding to the next moment.

It should be noted that the technical scheme of this embodiment is similar to that of the embodiment shown in FIG. 5, except that this embodiment is executed by the physical layer device, and after acquiring the target position information, the physical layer device recalculates the transmit power of the target RE according to the preset adjustment coefficient and the reference power set by a higher layer, processes the power configuration through resource mapping or IFFT, and sends the processed power configuration to the LTE system through an RRU, such that the LTE system can apply the power configuration, thereby suppressing the power of the target RE. For technical principles and effects of this embodiment, reference may be made to the description of the embodiment shown in FIG. 5, and the details will not be repeated herein for simplicity of description.

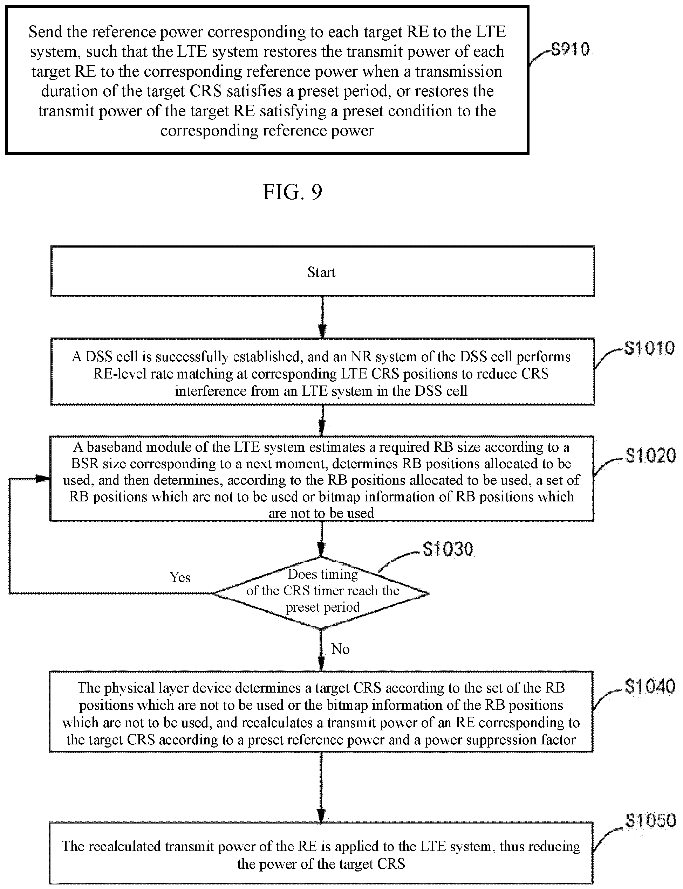

In addition, in an embodiment, referring to FIG. 9, after S840 in the embodiment shown in FIG. 8, the method further includes, but not limited to, a following step S910.

At S910, the reference power corresponding to each target RE is sent to the LTE system, such that the LTE system restores the transmit power of each target RE to the corresponding reference power when a transmission duration of the target CRS satisfies a preset period, or restores the transmit power of the target RE satisfying a preset condition to the corresponding reference power.

It should be noted that the technical scheme of this embodiment is similar to that of the embodiment shown in FIG. 6, except that this embodiment is executed by the physical layer device, and the physical layer device sends the reference power and the target power to the LTE system, such that the LTE system can restore the transmit power of the target RE to reduce the influence of the CRS on the channel estimation and access of the LTE terminal device side. For technical principles and effects of this embodiment, reference may be made to the description of the embodiment shown in FIG. 6, and the details will not be repeated herein for simplicity of description.

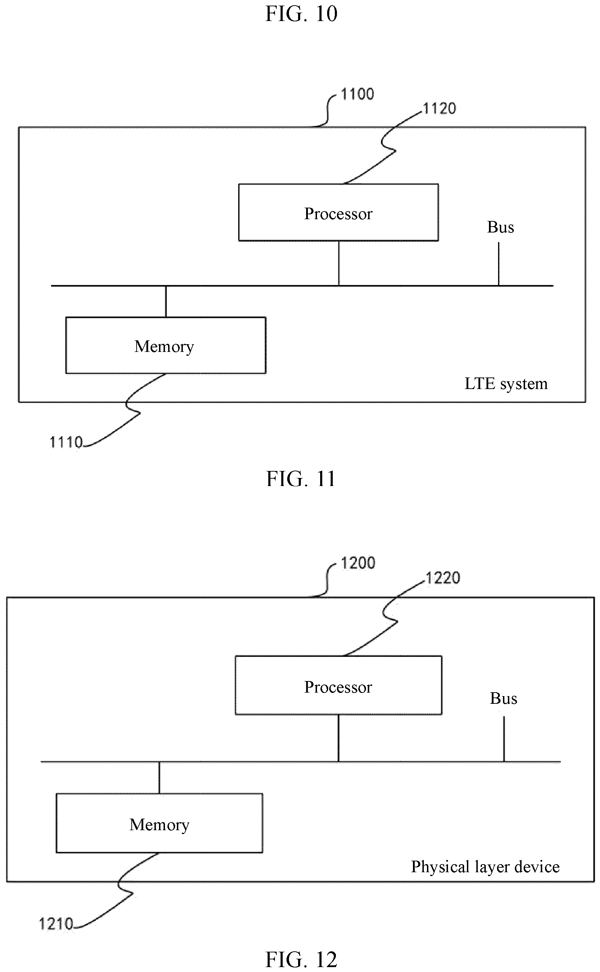

In addition, in order to further illustrate the technical scheme of this embodiment, an example is provided below in conjunction with the DSS cells shown in FIG. 2. In this example, the NR system and the LTE system in the DSS cell share a transmission spectrum, the resource requirement is a BSR, and the restoration of the target RE is triggered when timing of a CRS timer reaches the preset period. Referring to FIG. 10, this example includes, but not limited to, the following steps S1010, S1020, S1030, S1040, and S1050.

At S1010, a DSS cell is successfully established, and an NR system of the DSS cell performs RE-level rate matching at corresponding LTE CRS positions to reduce CRS interference from an LTE system in the DSS cell.

At S 1020, a baseband module of the LTE system estimates a required RB size according to a BSR size corresponding to a next moment, determines RB positions allocated to be used, and then determines, according to the RB positions allocated to be used, a set of RB positions which are not to be used or bitmap information of RB positions which are not to be used.

At S 1030, when timing of the CRS timer reaches the preset period, S 1020 is executed; otherwise, S 1040 is executed.

At S 1040, the physical layer device determines a target CRS according to the set of the RB positions which are not to be used or the bitmap information of the RB positions which are not to be used, and recalculates a transmit power of an RE corresponding to the target CRS according to a preset reference power and a power suppression factor.

At S1050, the recalculated transmit power of the RE is applied to the LTE system, thus reducing the power of the target CRS.

In addition, referring to FIG. 11, an embodiment of the present disclosure provides an LTE system 1100, including a memory 1110, a processor 1120, and a computer program stored in the memory 1110 and executable by the processor 1120.

The processor 1120 and the memory 1110 may be connected by a bus or in other ways.

The non-transitory software program and instructions required to implement the signal interference control method of the foregoing embodiments are stored in the memory 1110 which, when executed by the processor 1120, cause the processor 1120 to implement the signal interference control method of the foregoing embodiments, for example, implement the method steps S110 to S120 in FIG. 1, the method steps S310 to S330 in FIG. 3, the method step S410 or S420 in FIG. 4, the method steps S510 to S530 in FIG. 5, or the method step S610 or S620 in FIG. 6.

In addition, referring to FIG. 12, an embodiment of the present disclosure provides a physical layer device 1200, including a memory 1210, a processor 1220, and a computer program stored in the memory 1210 and executable by the processor 1220.

The processor 1220 and the memory 1210 may be connected by a bus or in other ways.

The non-transitory software program and instructions required to implement the signal interference control method of the foregoing embodiments are stored in the memory 1210 which, when executed by the processor 1220, cause the processor 1220 to implement the signal interference control method of the foregoing embodiments, for example, execute the method steps S710 to S720 in FIG. 7, the method steps S810 to S840 in FIG. 8, or the method step S910 in FIG. 9.

The apparatus embodiments described above are merely examples. The units described as separate components may or may not be physically separated, i.e., they may be located in one place or may be distributed over a plurality of network units. Some or all of the modules may be selected according to actual needs to achieve the purposes of the scheme of this embodiment.

In addition, an embodiment of the present disclosure provides a computer-readable storage medium, storing computer-executable instructions which, when executed by a processor or controller, for example, by a processor in the LTE system embodiment described above, may cause the processor to implement the signal interference control method of the foregoing embodiments, for example, implement the method steps S110 to S120 in FIG. 1, the method steps S310 to S330 in FIG. 3, the method step S410 or S420 in FIG. 4, the method steps S510 to S530 in FIG. 5, or the method step S610 or S620 in FIG. 6. For another example, the computer-executable instructions, when executed by a processor in the physical layer device described above, may cause the processor to implement the signal interference control method of the foregoing embodiments, for example, execute the method steps S710 to S720 in FIG. 7, the method steps S810 to S840 in FIG. 8, or the method step S910 in FIG. 9. Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium or non-transitory medium and a communication medium or transitory medium. As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and which can be accessed by a computer. In addition, as is known to those having ordinary skill in the art, the communication medium typically includes computer-readable instructions, data structures, program modules, or other data in a modulated data signal such as a carrier or other transport mechanism, and can include any information delivery medium.

The embodiments of the present disclosure include: determining target position information, where the target position information includes a position distribution status of a first RB in a transmission spectrum, and the first RB is a set of spectrum resources which are not to be used at a next moment; and sending the target position information to a physical layer device, such that the physical layer device determines a target CRS according to the target position information, and reduces a transmit power of the target CRS, where the target CRS is a CRS corresponding to the first RB at the next moment. According to the technical scheme of this embodiment, the power of the target CRS can be reduced to reduce the interference of the target CRS to a channel of a neighboring cell and improve the spectral efficiency of the neighboring cell, thereby improving user experience of the communication system.

Although some embodiments of the present disclosure have been described above, the present disclosure is not limited to the implementations described above. Those having ordinary skills in the art can make various equivalent modifications or replacements without departing from the essence of the present disclosure. Such equivalent modifications or replacements fall within the scope defined by the claims of the present disclosure.

## Claims

1. A signal interference control method, applied to a Long Term Evolution (LTE) system in communication connection with a physical layer device, the method comprising:
determining target position information, wherein the target position information comprises a position distribution status of a first Resource Block (RB) in a transmission spectrum, and the first RB is a set of spectrum resources which are not to be used at a next moment; and
sending the target position information to the physical layer device, such that the physical layer device determines a target Cell-Specific Reference Signal (CRS) according to the target position information and reduces a transmit power of the target CRS, wherein the target CRS is a CRS corresponding to the first RB at the next moment.

2. The method of claim 1, wherein before determining target position information, the method further comprises:
determining a target resource size according to a resource requirement of the LTE system at the next moment;
determining a second RB in the transmission spectrum according to the target resource size, wherein the second RB is a set of spectrum resources to be used at the next moment; and
determining a set of spectrum resources not belonging to the second RB as the first RB.

3. The method of claim 2, wherein determining target position information comprises:
determining position information of the first RB in the transmission spectrum as the target position information;
or
generating a target RB bitmap of the transmission spectrum corresponding to the next moment, and determining the target RB bitmap as the target position information, wherein the target RB bitmap describes a position distribution status of the first RB and the second RB in the transmission spectrum.

4. The method of claim 1, wherein sending the target position information to the physical layer device, such that the physical layer device determines a target CRS according to the target position information and reduces a transmit power of the target CRS comprises:
reporting the target position information to the physical layer device, such that the physical layer device determines a target resource position corresponding to the first RB according to the target position information, and determines a CRS corresponding to the target resource position as the target CRS;
acquiring a target power of each target Resource Element (RE) fed back by the physical layer device, wherein the target RE is an RE corresponding to the target CRS, the target power is determined by the physical layer device according to a preset adjustment coefficient and a reference power of each target RE, a number of target REs is at least one, and the preset adjustment coefficient is a positive number less than or equal to 1; and
determining the target power as a transmit power of the target RE corresponding to the next moment.

5. The method of claim 4, wherein after acquiring a target power of each target RE fed back by the physical layer device, the method further comprises acquiring the reference power of each target RE fed back by the physical layer device; and
after determining the target power as a transmit power of the target RE corresponding to the next moment, the method further comprises:
restoring the transmit power of each target RE to the corresponding reference power in response to a transmission duration of the target CRS satisfying a preset period;
or
restoring the transmit power of the target RE satisfying a preset condition to the corresponding reference power.

6. A signal interference control method, applied to a physical layer device in communication connection with a Long Term Evolution (LTE) system, the method comprising:
acquiring target position information sent by the LTE system, wherein the target position information comprises a position distribution status of a first Resource Block (RB) in a transmission spectrum, and the first RB is a set of spectrum resources which are not to be used at a next moment; and
determining a target Cell-Specific Reference Signal (CRS) according to the target position information and reducing a transmit power of the target CRS, wherein the target CRS is a CRS corresponding to the first RB at the next moment.

7. The method of claim 6, wherein the target position information comprises at least one of
position information of the first RB in the transmission spectrum; or
a target RB bitmap of the transmission spectrum corresponding to the next moment, wherein the target RB bitmap describes a position distribution status of the first RB and a second RB in the transmission spectrum, and the second RB is a set of spectrum resources to be used at the next moment.

8. The method of claim 6, wherein determining a target CRS according to the target position information and reducing a transmit power of the target CRS comprises:
determining a target resource position corresponding to the first RB according to the target position information, and determining a CRS corresponding to the target resource position as the target CRS;
determining an RE corresponding to the target CRS as a target RE, wherein a number of target REs is at least one;
determining a target power of each target RE according to a preset adjustment coefficient and a reference power of each target RE, wherein the preset adjustment coefficient is a positive number less than or equal to 1; and
feeding back the target power of each target RE to the LTE system, such that the LTE system determines the target power as a transmit power of the target RE corresponding to the next moment.

9. The method of claim 8, wherein after feeding back the target power of each target RE to the LTE system, the method further comprises:
sending the reference power corresponding to each target RE to the LTE system, such that the LTE system restores the transmit power of each target RE to the corresponding reference power in response to a transmission duration of the target CRS satisfying a preset period, or restores the transmit power of the target RE satisfying a preset condition to the corresponding reference power.

10. A Long Term Evolution (LTE) system, comprising: a memory, a processor, and a computer program stored in the memory and executable by the processor, wherein the computer program, when executed by the processor, causes the processor to perform the signal interference control method of any of claims 1 to 5.

11. A physical layer device, comprising: a memory, a processor, and a computer program stored in the memory and executable by the processor, wherein the computer program, when executed by the processor, causes the processor to perform the signal interference control method of any of claims 6 to 9.

12. A computer-readable storage medium, storing computer-executable instructions which, when executed by a processor, cause the processor to perform the signal interference control method of any of claims 1 to 9.
